# EUROPÄISCHE PATENTSCHRIFT

(11) **EP 1 321 026 B1**
(45) Veröffentlichungstag und Bekanntmachung des Hinweises auf die Patenterteilung: **21.06.2006**
(21) Anmeldenummer: 02027224.1
(22) Anmeldetag: 06.12.2002
(51) Int. Cl.: A01D 75/28

(54) **Landwirtschaftliche Erntemaschine mit Seitengang**
Harvesting machine for hillside working
Machine de récolte pour travail sur pente

(30) Priorität: 21.12.2001 DE 10163573
(43) Veröffentlichungstag der Anmeldung: 25.06.2003
(73) Patentinhaber: CLAAS Selbstfahrende Erntemaschinen GmbH, 33428 Harsewinkel (DE)
(72) Erfinder: Uhlending, Hubert, 48249 Dülmen (DE); Auer, Ernst, 81245 München (DE)
(74) Vertreter: Klesper, Hanns-Otto

(56) Entgegenhaltungen:
- EP-A- 0 736 244
- EP-A- 0 864 250
- DE-A- 10 018 211

## Beschreibung

Die Erfindung betrifft eine landwirtschaftliche Erntemaschine, beispielsweise ein selbstfahrender Mähdrescher, welche mit einem Vorsatzgerät ausgerüstet ist, dass mittels Hubzylinder schwenkbar ist, und die mit einer starren Achse, einem Hauptgetriebe und zwei den Antriebsrädern vorgeschalteten, mit dem Hauptgetriebe antriebstechnisch gekoppelten Radgetrieben ausgerüstet ist, von denen mindestens eines um eine definierte Achse mittels einer regelbaren Schwenkeinrichtung verstellbar ist.

Die in Frage kommende Maschine ist nicht nur für den Betrieb auf ebenem Boden ausgelegt, sondern auch für den Einsatz in Hanglage. Damit es bei letzterem nicht zu Beeinträchtigungen der Funktion der Erntemaschine kommt, muss die Maschine so ausgelegt sein, dass die Neigung der Hanglage ausgeglichen werden kann. Dies erfolgt durch das Radgetriebe in dem das zugehörige Antriebsrad gegenüber der definierten Schwenkachse entsprechend der Neigung eingestellt werden kann. Die Verstellung der Radgetriebe bzw. der Antriebsräder erfolgt durch eine entsprechend ausgelegte Regeleinrichtung selbsttätig.

Bei einer vorbekannten landwirtschaftlichen Erntemaschine nach dem EP 736 244 ist zwischen der starren Achse und dem Radgetriebe eine diese beiden Elemente verbindende Schwenkvorrichtung vorgesehen. Sie enthält eine feste Konsole und einen Stellzylinder. Die Antriebsräder werden aus der Antriebsquelle, dem Hauptgetriebe, über die Radgetriebe angetrieben, die mit einer Ausgangswelle ausgestattet sind, die in die Radnaben übergehen und in dem Radgetriebe drehbar gelagert sind. Parallel zu der Ausgangswelle verläuft die Eingangswelle des Radgetriebes, so dass sich die Lage der Ausgangswelle in der Höhe verändert, wenn das Radgetriebe um die Eingangswelle geschwenkt wird. Die Konsole ist bei der vorbekannten landwirtschaftlichen Erntemaschine aus dickwandigem Stahlblech gefertigt, und nach Art eines an seiner Unterseite teilweise offenen Gehäuse ausgebildet. Sie ist stirnseitig an der starren Achse montiert. Zwischen den beiden Wänden der Konsole befindet sich ein Freiraum, in dem der Stellzylinder bewegt ist. Die beschriebene Ausführung ist konstruktiv aufwendig und demzufolge entsprechend kostenintensiv. Außerdem bietet sie keine Möglichkeit, das an der Stellvorrichtung weitere Stellglieder oder Stellzylinder gelagert werden können.

Der Erfindung liegt die Aufgabe zugrunde, eine landwirtschaftliche Erntemaschine der eingangs genauer beschriebenen Art so auszulegen, dass eine konstruktiv einfache Ausführung für die Verstellung der Antriebsräder bzw. des Antriebsrades zum Ausgleich der Neigung bei einer Hanglage geschaffen wird. Darüber hinaus soll die Schwenkeinrichtung so ausgelegt werden, dass daran weitere Stellglieder, vorzugsweise Hubzylinder, gelagert werden können.

Die gestellte Aufgabe wird gelöst, indem an den einander zugewandten Seiten der Radgetriebe jeweils ein Formkörper angeordnet ist, in dem die Verschwenkeinrichtung für das zugehörige Radgetriebe und mindestens ein weiteres Stellglied, vorzugsweise ein Hubzylinder, für anderweitige Verwendungszwecke, beispielsweise für ein Vorsatzgerät, gehaltert sind.

Jeder Formkörper ist nunmehr ein Mehrfachfunktionsbauteil welches so ausgelegt ist, dass das Hauptfunktionsteil der Schwenkeinrichtung so wie ein weiteres Stellglied für das Vorsatzgerät darin gehaltert sein können. Dadurch wird eine kompakte Bauweise erreicht, so dass Freiräume für weitere Bauteile zwischen den Achsenenden bzw. den Laufrädem geschaffen werden. Außerdem wird die Anzahl der benötigten Bauteile so gering wie möglich gehalten, so dass nicht nur eine kostengünstige Lösung, sondern auch eine äußerst zuverlässig arbeitende Lösung geschaffen wird. So ist in weiterer Ausgestaltung vorgesehen, dass die starre Achse über die Formkörper fest mit den Maschinengehäusen verbunden ist. Daraus ergibt sich, dass jeder Formkörper zwischen dem Maschinengehäuse und der starren Achse bzw. oberhalb der starren Achse angeordnet ist. Eine konstruktiv einfache Lösung lässt sich erreichen, wenn jeder Formkörper an der der starren Achse abgewandten Seite mit mindestens einer, vorzugsweise quer zur starren Achse stehenden Montage - bzw. Lochschiene ausgestattet ist. Die Verbindung mit dem Maschinengehäuse kann dann über eine entsprechende Anzahl von Schrauben erfolgen, so dass im Bedarfsfalle, beispielsweise bei Wartungs- oder Reparaturarbeiten in einfachster Weise die starre Achse sowie die Antriebsräder mit den Getrieben demontiert werden können. Zur Halterung der Schwenkeinrichtung für jedes Radgetriebe und zur Halterung des Stellgliedes für das Vorsatzgerät ist vorgesehen, dass jeder Formkörper gehäuseartig gestaltet ist und zwei im Abstand zueinander, vorzugsweise parallel und im Abstand zueinander, sowie quer zu der starren Achse stehende Seitenwände aufweist. Die Schwenkeinrichtung für das Radgetriebe, beispielsweise ein Stellzylinder sowie das Stellglied für das Vorsatzgerät kann dann mittels Bolzen aufgehängt werden, deren Stirnenden in die Seitenwände eingreifen. Zur Erhöhung der Stabilität ist vorgesehen, dass die Seitenwände durch Stirnwände miteinander verbunden sind, und dass sie Stirnwandöffnungen für die Schwenkeinrichtung und für das Stellglied des Vorsatzgerätes aufweisen. Eine kostengünstige Lösung zur Herstellung jedes Formkörpers ist gegeben, wenn dieser als einstückiger im Gießverfahren hergestellter Formkörper ausgebildet ist. Bevorzugt wird jeder Formkörper im Stahlgussverfahren hergestellt. Die Anordnung des Stellzylinders für jedes Radgetriebe ist durch die Auslegung der Radgetriebe vorgegeben. Es ist deshalb vorgesehen, dass jeder Hubzylinder für das Vorsatzgerät unterhalb des Stellzylinders für das Radgetriebe gehaltert ist. Der Hubzylinder für das Vorsatzgerät und der Stellzylinder für das Radgetriebe schließen einen bestimmten Winkel ein, der sich jedoch ändert, sobald entweder der Stellzylinder oder der Hubzylinder betätigt wird. Der Formkörper ist außerdem so ausgelegt, dass der Stellzylinder für das Radgetriebe und der Hubzylinder für das Vorsatzgerät fluchtend zueinander stehen, dass heißt die Mittellängsachsen liegen in einer Ebene, die quer zur starren Achse steht. Es ist außerdem für die Funktion besonders vorteilhaft, wenn der Anlenkpunkt des Stellzylinders für das Radgetriebe zur Drehachse des Antriebrades und im Versatz zur Mittellängsachse der starren Achse steht, bezogen auf die Seitenansicht der Erntemaschine.

Anhand der beiliegenden Zeichnungen wird die Erfindung noch näher erläutert. Es zeigen:
- Fig.1: den vorderen Bereich einer landwirtschaftlichen Erntemaschine in Form eines selbstfahrenden Mähdreschers,
- Fig.2: eine Ansicht in Richtung des Pfeils II der Fig.1
- Fig.3: eine Draufsicht zu Fig.2,
- Fig.4: einen Schnitt längs der Linie IV-IV in Fig.2,
- Fig.5: die Achse mit einem Formteil und einem Antriebsrad in perspektivischer Darstellung
- Fig.6: eine Fig. 5 entsprechende Ansicht, jedoch ohne den Formkörper

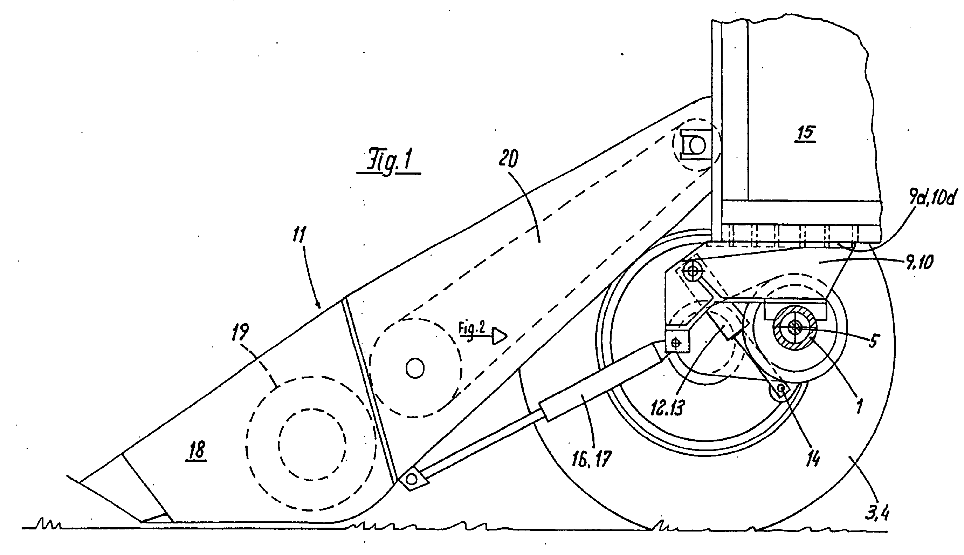

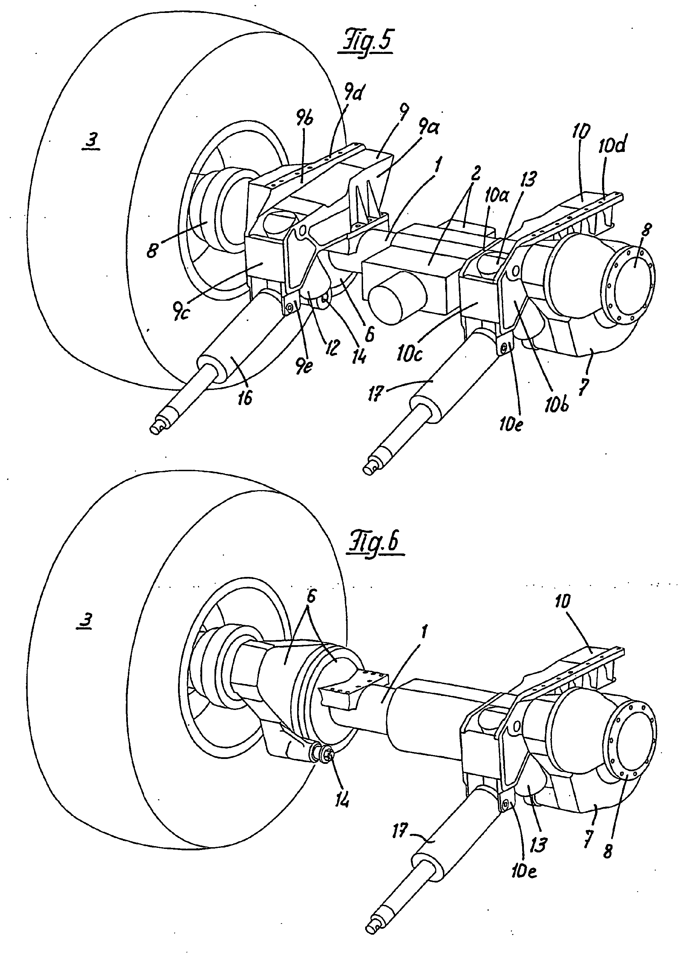

In den Fig. 1 bis 6 ist der vordere, der starren Achse 1 zugeordnete Bereich eines selbstfahrenden Mähdreschers in Teilansichten dargestellt. An der starren Achse 1 ist das Hauptgetriebe 2 zum Antrieb der Antriebsräder 3 und 4 montiert. Im Inneren der starren Achse 1 ist eine Antriebswelle 5 zentrisch gelagert, die in nicht näher erläuteter Weise über Radgetriebe 6, 7 die Antriebsflansche 8 antreibt, an denen Antriebsräder 3, 4 angeschraubt sind.

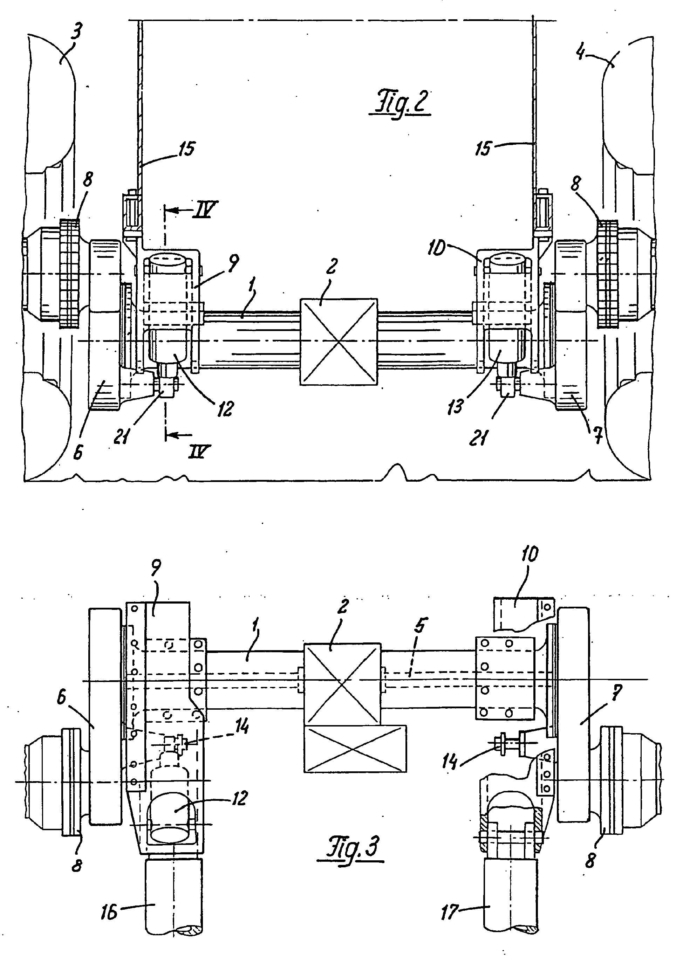

Wie insbesondere die Fig. 2 bis 5 zeigen, sind auf die Endbereiche der starren Achse 1 zwei spiegelbildliche Formkörper 9, 10 durch Verschrauben fest aufgesetzt. Jeder Formkörper 9, 10 ist im Gießverfahren hergestellt und gehäuseartig gestaltet, und weist demzufolge zwei parallel und im Abstand zueinander stehende Seitenwände 9a, 9b, 10a und 10b auf. Die parallel und im Abstand zueinander stehenden Seitenwände 9a, 9b, 10a und 10b sind durch Stirnwände 9c und 10c miteinander verbunden, wobei aus Darstellungsgründen nur die in Fahrtrichtung des Mähdreschers vornliegenden Seitenwänden 9c und 10c sichtbar sind. In Fahrtrichtung vorn ist der Mähdrescher mit einem noch näher erläuterten Vorsatzgerät 11 ausgestattet. An der dem Vorsatzgerät 11 zugewandten Seite ist im oberen Bereich jedes Formkörpers 9, 10 jeweils ein Stellzylinder 12, 13 mittels in den Seitenwänden 9a, 9b, 10a und 10b festgesetzten Bolzen aufgehängt. Die Kolbenstangen 21 der Stellzylinder 12, 13 sind an Bolzen 14 gelenkig gelagert, die an den Radgetrieben 6, 7 angeformt sind. Diese Bolzen 14 liegen außerhalb der Mittellängsachse der starren Achse 1 und außerhalb der Drehachsen der Antriebsräder 3, 4. Die Radgetriebe 6, 7 schwenken um nicht dargestellte Zahnkränze, die direkt außen an den Formkörpern 9, 10 montiert sind. In der Fig.6 ist diese Stelle durch den Pfeil 15 gekennzeichnet. An der oberen Seite ist jeder Formkörper 9, 10 mit jeweils einer Lochleiste 9d, 10d versehen, die quer zur starren Achse 1 steht. Die Fig.1 zeigt, dass mittels dieser Lochleisten 9d, 10d die starre Achse 1 einschließlich der damit verbundenden Bauteile oder Baugruppen mit dem Maschinengehäuse 15 lösbar verbunden ist. An den Formkörpern 9, 10 sind im unteren Bereich sowie an der dem Vorsatzgerät 11 zugewandten Seite Augen 9e und 10e angeformt, die Bolzen tragen, auf denen Hubzylinder 16, 17 gelagert sind, um das Vorsatzgerät 11 zu schwenken. Insbesondere die Fig.2 und 3 zeigen, dass die Stellzylinder 12, 13 und die Hubzylinder 16, 17 mit ihren Längsachsen fluchtend zueinander stehen.

Das Vorsatzgerät 11 besteht im dargestellten Ausführungsbeispiel aus einem Schneidwerk 18, welches mit einer Querförderschnecke 19 ausgestattet ist, um das abgeschnittene Erntegut zu einem Schrägförderer 20 mit geringerer Breite zu transportieren. Vom Schrägförderer 20 aus gelangt das Erntegut zunächst in das Dreschwerk.

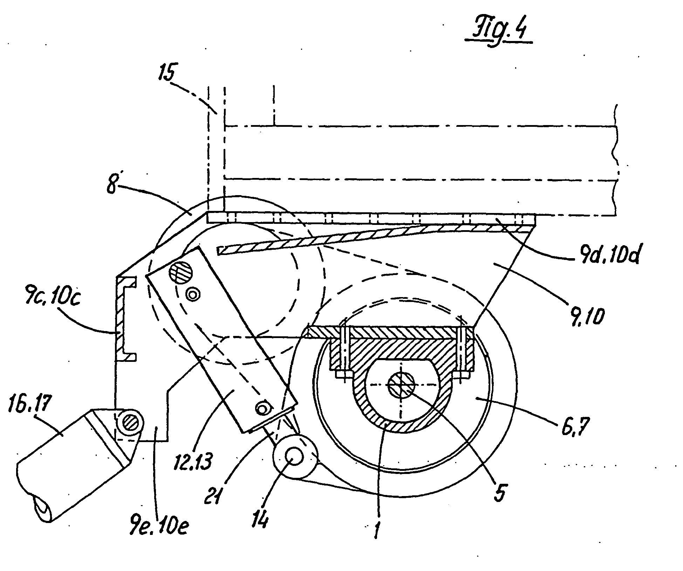

Die Fig.1 zeigt die Stellzylinder 12, 13 mit ausgefahrenen Kolbenstangen 21, das heißt die Drehachsen der Antriebsräder 3, 4 liegen in einem größtmöglichen Abstand zum Maschinengehäuse 15. In der Fig.4 sind die Kolbenstangen 21 der Stellzylinder 12, 13 eingefahren und ein Vergleich der beiden Figuren zeigt, dass in der Darstellung nach der Fig. 4 der Abstand der Drehachsen der Antriebsräder 3 deutlich geringer ist. Es sei noch erwähnt, dass nur einem Antriebsrad 3 oder 4 ein Radgetriebe 6, 7 zugeordnet werden muss. In bevorzugter Ausführung sind jedoch beide Antriebsräder mit einem Radgetriebe ausgerüstet, da dadurch der Stellbereich verdoppelt wird. Es sei ferner noch erwähnt, dass im Betrieb nicht die Kolbenstangen 21 beider Stellzylinder 12, 13 ausgefahren werden, sondern entweder nur eine der Kolbenstangen 21 oder beide Kolbenstangen 21 der Stellzylinder 12, 13 hierdurch dann im entgegengesetzten Richtungen.

Die Erfindung ist nicht auf das dargestellte Ausführungsbeispiel beschränkt. Wesentlich ist, dass jedem Radgetriebe 6, 7 ein auf der starren Achse 1 festgesetzter Formkörper 9, 10 funktionell zugeordnet ist, und dass in jedem Formkörper 9, 10 sowohl ein Stellzylinder 12, 13 für die Schwenkbewegung der Radgetriebe 6,7 und ein weiteres Stellglied zum Schwenken des Vorsatzgerätes 11 aufgehängt ist. Ferner ist von Bedeutung, dass die Formkörper 9, 10 so ausgelegt sind, dass eine feste Verbindung zwischen der starren Achse 1 und dem Maschinengehäuse 15 ermöglicht wird.

### Bezugszeichenliste

- 1: Starre Achse
- 2: Hauptgetriebe
- 3: Antriebsrad
- 4: Antriebsrad
- 5: Antriebswelle
- 6: Radgetriebe
- 7: Radgetriebe
- 8: Antriebsflansch
- 9: Formkörper
- 9a: Seitenwand
- 9b: Seitenwand
- 9c: Stirnwand
- 9d: Lochleiste
- 9e: Auge
- 10: Formkörper
- 10a: Seitenwand
- 10b: Seitenwand
- 10c: Stirnwand
- 10d: Lochleiste
- 10e: Auge
- 11: Vorsatzgerät
- 12: Stellzylinder
- 13: Stellzylinder
- 14: Bolzen
- 15: Maschinengehäuse
- 16: Hubzylinder
- 17: Hubzylinder
- 18: Schneidwerk
- 19: Querförderschnecke
- 20: Schrägförderer
- 21: Kolbenstange

## Patentansprüche

1. Landwirtschaftliche Erntemaschine, beispielsweise ein selbstfahrender Mähdrescher, welche mit einem Vorsatzgerät ausgestattet ist, welches mittels Hubzylinder schwenkbar ist, und Welche mit einer starren Achse (1), einem Hauptgetriebe (2) und zwei den Antriebsrädern (3, 4) vorgeschalteten, mit dem Hauptgetriebe (2) antriebstechnisch gekoppelten Radgetrieben4ausgerüstet ist, von denen mindestens eines um eine definierte Achse mittels einer regelbaren Schwenkeinrichtung (12, 13) verstellbar ist,
**dadurch gekennzeichnet,**
**dass** an den einander zugewandten Seiten der Radgetriebe (6, 7) jeweils ein Formkörper (9, 10) angeordnet ist, in dem die jeweilige Schwenkeinrichtung (12, 13) für das zugehörige Radgetriebe (6, 7) und zumindest ein Verstellglied (16, 17) für das Vorsatzgerät (11) gehaltert sind.

2. Landwirtschaftliche Erntemaschine nach Anspruch 1,
**dadurch gekennzeichnet,**
**dass** die starre Achse 1 über die Formkörper (9, 10) fest, jedoch lösbar mit dem Maschinengehäuse (15) verbunden ist.

3. Landwirtschaftliche Erntemaschine nach Anspruch 1,
**dadurch gekennzeichnet,**
**dass** jeder Formkörper (9, 10) an der der starren Achse 1 abgewandten Seite mit mindestens einer, vorzugsweise quer zur starren Achse 1 stehenden Lochschiene (9d, 10d) ausgestattet ist.

4. Landwirtschaftliche Erntemaschine nach einem oder mehreren der vorhergehenden Ansprüche 1 bis 3,
**dadurch gekennzeichnet,**
**dass** jeder Formkörper (9, 10) als einstückiger Gießformkörper ausgebildet ist.

5. Landwirtschaftliche Erntemaschine nach einem oder mehreren der vorhergehenden Ansprüche1 bis 4,
**dadurch gekennzeichnet,**
**dass** jede Schwenkeinrichtung (12, 13) für das zugeordnete Radgetriebe (6, 7) von einem Stellzylinder (12, 13) mit einer ausfahrbaren Kolbenstange (21) gebildet wird, wobei die Kolbenstange (21) mittels eines Bolzens (14) gehaltert ist, der dem Vorsatzgerät (11) und dem Maschinengehäuse (15) zugewandten Seite in den jeweiligen Formkörper (9, 10) eingesetzt ist.

6. Landwirtschaftliche Erntemaschine nach einem oder mehreren der vorhergehenden Ansprüche,
**dadurch gekennzeichnet,**
**dass** das Verstellglied (16, 17) als Hubzylinder (16, 17) ausgeführt ist.

7. Landwirtschaftliche Erntemaschine nach einem oder mehreren der vorhergehenden Ansprüche,
**dadurch gekennzeichnet,**
**dass** jeder Hubzylinder (16, 17) für das Vorsatzgerät (11) unterhalb des Stellzylinders (12, 13) für das jeweilige Radgetriebe (6, 7) gehaltert ist.

8. Landwirtschaftliche Erntemaschine nach einem oder mehreren der vorhergehenden Ansprüche,
**dadurch gekennzeichnet,**
**dass** die Hubzylinder (16, 17) für das Vorsatzgerät (11) und der Stellzylinder (12, 13) für die Radgetriebe (6, 7) fluchtend zueinander stehen.

## Claims

1. An agricultural harvester, for example a self-propelled combine harvester, which is equipped with a front-mounted implement pivotable by means of stroke cylinders and which is equipped with a rigid axle (1), a main transmission (2) and two wheel transmissions (6, 7) which are disposed in front of the drive wheels (3, 4) and which are drivingly coupled to the main transmission (2) and of which at least one is displaceable about a defined axis by means of a regulatable pivoting device (12, 13),
**characterised in that**
arranged at each of the two mutually facing sides of the wheel transmissions (6, 7) is a respective shaped body (9, 10) in which the respective pivoting device (12, 13) for the associated wheel transmission (6, 7) and at least one displacement member (16, 17) for the front-mounted implement (11) are held.

2. An agricultural harvester according to claim 1 **characterised in that** the rigid axle (1) is connected by way of the shaped bodies (9, 10) fixedly but releasably to the machine housing (15).

3. An agricultural harvester according to claim 1 **characterised in that** each shaped body (9, 10) is provided at the side remote from the rigid axle (1) with at least one perforated bar (9d, 10d) which is preferably disposed transversely with respect to the rigid axle (1).

4. An agricultural harvester according to one or more of preceding claims 1 to 3 **characterised in that** each shaped body (9, 10) is in the form of a one-piece casting.

5. An agricultural harvester according to one or more of preceding claims 1 to 4 **characterised in that** each pivoting device (12, 13) for the associated wheel transmission (6, 7) is formed by an adjusting cylinder (12, 13) with an extensible piston rod (21), wherein the piston rod (21) is held by means of a bolt (14) which is fitted into the respective shaped body (9, 10) at sides towards the front-mounted implement (11) and the machine housing (15).

6. An agricultural harvester according to one or more of the preceding claims **characterised in that** the displacement member (16, 17) is in the form of a stroke cylinder (16, 17).

7. An agricultural harvester according to one or more of the preceding claims **characterised in that** each stroke cylinder (16, 17) for the front-mounted implement (11) is held beneath the adjusting cylinder (12, 13) for the respective wheel transmission (6, 7).

8. An agricultural harvester according to one or more of the preceding claims **characterised in that** the stroke cylinders (16, 17) for the front-mounted implement (11) and the adjusting cylinder (12, 13) for the wheel transmissions (6, 7) are in mutually aligned relationship.

## Revendications

1. Machine agricole de récolte, par exemple moissonneuse-batteuse automotrice, munie d'un outil frontal pouvant pivoter au moyen de vérins de relevage et équipée d'un essieu rigide (1), d'une transmission principale (2) et de deux transmissions de roues (6, 7) qui sont montées en amont des roues motrices (3, 4) et couplées sur le plan de l'entraînement à la transmission principale (2) et dont au moins une est déplaçable autour d'un axe défini au moyen d'un dispositif de basculement réglable (12, 13), **caractérisée en ce que** sur chacun des côtés en vis-à-vis des transmissions de roues (6, 7) est disposé un corps moulé (9, 10) dans lequel sont logés le dispositif de basculement respectif (12, 13) pour la transmission de roue associée (6, 7) et au moins un organe de déplacement (16, 17) pour l'outil frontal (11).

2. Machine agricole de récolte selon la revendication 1, **caractérisée en ce que** l'essieu rigide (1) est relié au carter de machine (15) de manière solidaire mais détachable par l'intermédiaire des corps moulés (9, 10).

3. Machine agricole de récolte selon la revendication 1, **caractérisée en ce que** chaque corps moulé (9, 10) est équipé, sur le côté orienté à l'opposé de l'essieu rigide (1), d'au moins un rail perforé (9d, 10d) situé de préférence transversalement à l'essieu rigide (1).

4. Machine agricole de récolte selon une ou plusieurs des revendications précédentes 1 à 3, **caractérisée en ce que** chaque corps moulé (9, 10) est conformé en corps moulé coulé d'une seule pièce.

5. Machine agricole de récolte selon une ou plusieurs des revendications précédentes 1 à 4, **caractérisée en ce que** chaque dispositif de basculement (12, 13) pour la transmission de roue associée (6, 7) est formé par un vérin de positionnement (12, 13) avec une tige de piston sortante (21), la tige de piston (21) étant maintenue au moyen d'un axe (14) qui est inséré dans le côté du corps moulé respectif (9, 10) tourné vers l'outil frontal (11) et vers le carter de machine (15).

6. Machine agricole de récolte selon une ou plusieurs des revendications précédentes, **caractérisée en ce que** l'organe de déplacement (16, 17) est conformé en vérins de relevage (16, 17).

7. Machine agricole de récolte selon une ou plusieurs des revendications précédentes, **caractérisée en ce que** chaque vérin de relevage (16, 17) pour l'outil frontal (11) prend appui au-dessous du vérin de positionnement (12, 13) de la transmission de roue correspondante (6, 7).

8. Machine agricole de récolte selon une ou plusieurs des revendications précédentes, **caractérisée en ce que** les vérins de relevage (16, 17) pour l'outil frontal (11) et les vérins de positionnement (12, 13) pour les transmissions de roues (6, 7) sont disposés dans l'alignement les uns des autres.
